# EUROPEAN PATENT SPECIFICATION

(11) **EP 3 944 521 B1**
(45) Date of publication and mention of the grant of the patent: **09.09.2026**
(21) Application number: 21187145.4
(22) Date of filing: 22.07.2021
(51) Int. Cl.: H04B 10/2513, H04B 10/27, H04B 10/40

(54) **DEVICE, METHOD, APPARATUS AND COMPUTER-READABLE MEDIUM FOR OPTICAL COMMUNICATION**
VORRICHTUNG, VERFAHREN, GERÄT UND COMPUTERLESBARES MEDIUM ZUR OPTISCHEN KOMMUNIKATION
DISPOSITIF, PROCÉDÉ, APPAREIL ET SUPPORT LISIBLE PAR ORDINATEUR POUR COMMUNICATION OPTIQUE

(30) Priority: 23.07.2020 CN 202010717757
(43) Date of publication of application: 26.01.2022
(73) Proprietor: Nokia Technologies Oy, 02610 Espoo (FI)
(72) Inventor: Chenhui, Ye, SHANGHAI, 200030 (CN); Xiaofeng, Hu, SHANGHAI (CN); Kaibin, Zhang, SHANGHAI (CN)
(74) Representative: DREISS Patentanwälte PartG mbB

(56) References cited:
- EP-A1- 2 040 397
- CN-A- 110 267 127
- US-A1- 2006 280 502
- US-A1- 2010 158 530

## Description

### FIELD

Embodiments of the present disclosure generally relate to communication technology, and more specifically, to a method, device, apparatus and computer-readable medium for optical communications.

### BACKGROUND

Technologies used for optical communications have been further developed in recent years. Equalization now has become one of the hottest topics under discussion. Since the severe signal distortion and even detection failure issues in high-speed serial signals caused by optical devices and optical fiber transmission cannot be recovered by using traditional feed forward (FFE) linear equalization methods, equalization methods need to be improved. US 2996/0280502 A1 discloses an optical access network system. CN 110267127 discloses method, apparatus and computer readable medium for a low cost passive optical network.

### SUMMARY

In general, embodiments of the present disclosure relate to a method and corresponding electronic device for optical communication.

In a first aspect, embodiments of the present disclosure provide a communication method according to claim 1.

In a second aspect, embodiments of the present disclosure provide a communication method according to claim 8.

In a third aspect, embodiments of the present disclosure provide an optical network unit according to claim 12.

In a fourth aspect, embodiments of the present disclosure provide an optical line terminal according to claim 15.

In a fifth aspect, embodiments of the present disclosure provide a computer-readable storage medium according to claim 18.

It should be understood that what is described in the summary is neither intended to limit the key or essential features of exemplary embodiments of the present disclosure, nor to limit the scope of the present disclosure. Other features of the present disclosure will become apparent through the following description.

### BRIEF DESCRIPTION OF THE DRAWINGS

The foregoing and other features, benefits, and aspects of various embodiments of the present disclosure will become more apparent from the following detailed description with reference to the accompanying drawings, where:
Fig. 1 shows a block diagram of an example communication system in which embodiments of the present disclosure may be implemented;
Fig. 2 shows an interaction signaling diagram of an example method according to some embodiments of the present disclosure;
Fig. 3 shows an example block diagram of a signal equalization apparatus according to embodiments of the present disclosure;
Figs. 4A and 4B each show an example block diagram of signal characteristics according to the present disclosure;
Figs. 5A to 5C each show an example block diagram of a neural network structure according to embodiments of the present disclosure;
Fig. 6 shows an example block diagram of signal processing according to embodiments of the present disclosure;
Figs. 7A and 7B show an example block diagram of a neural network structure according to embodiments of the present disclosure, respectively;
Fig. 8 shows a flowchart of an example method according to embodiments of the present disclosure;
Fig. 9 shows a flowchart of an example method according to embodiments of the present disclosure;
Fig. 10 shows a comparison diagram of simulation performance results of embodiments of the present disclosure and traditional technology;
Fig. 11 shows a block diagram of a communication device according to some embodiments of the present disclosure; and
Fig. 12 shows a block diagram of an example computer-readable medium according to some embodiments of the present disclosure.

Throughout the drawings, the same or similar reference numerals represent the same or similar elements.

### DETAILED DESCRIPTION

Embodiments of the present disclosure will be described in more detail with reference to the accompanying drawings, in which some embodiments of the present disclosure have been illustrated. However, the present disclosure can be implemented in various ways, and thus should not be construed to be limited to embodiments disclosed herein. On the contrary, those embodiments are provided for the thorough and complete understanding of the present disclosure. It should be understood that the accompanying drawings and embodiments of the present disclosure are merely for the illustration purpose, rather than limiting the protection scope of the present disclosure.

The term "circuitry" used herein refers to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of "circuitry" applies to all use cases of this term in this application (including in any claims). As a further example, the term "circuitry" used herein also covers an implementation of merely a hardware circuit or a processor (or multiple processors), or a portion of a hardware circuit or a processor, and its (or their) accompanying software and/or firmware. The term "circuit" also covers, for example, and if applicable to a particular claim element, a baseband integrated circuit or a processor integrated circuit, or OLT, DPU or similar integrated circuits in other computing devices.

The term "optical line terminal (OLT)" used herein may refer to a local-end device, which may be connected with a front-end (convergence layer) switch by a cable, converted to an optical signal and interconnected with a user-end optical splitter by a single optical fiber. The term "optical network unit (ONU)" used herein may refer to a communication device, which selectively receives broadcasts sent by an OLT and responds to the OLT if the data needs to be received; collects and caches Ethernet data which a user needs to send and sends the cached data to the OLT according to an assigned send window.

As used herein, the terms "comprise," "include" and variants thereof are intended to be inclusive, i.e. "including but not limited to." The term "based on" is intended to include "based at least in part on." The term "one embodiment" or "the embodiment" is intended to include "at least one embodiment." The term "a further embodiment" is intended to include "at least one further embodiment." Relevant definitions of other terms will be provided in the following description may also.

In an optical communication network (e.g., a passive optical network PON), a new ONU needs to register at OLT. For example, OLT periodically sends serial-number request (SN-request) messages, and when a new ONU attends to access or wants to be reactivated, it needs to respond to OLT. Thereafter, OLT will perform ranging to calculate a proper delay for that ONU so as to avoid collision with currently online ONUs. After completing the registration, ONU can normally start payloads transmission with OLT.

Such a generic standardized process inherited from previous PON generations has now been adopted in 50G high-speed PON (HSP). However, for the sake of unprecedented high line rate of 50Gb/s in downstream, such a conventional process now encounters problems in new-generation PONs. In high-speed PON like 50Gb/s, broadcast querying messages for "formal ONU discovery and registration" can easily be missed especially by a faraway ONU due to a high bit error rate (BER) before formal equalization. Missing an important "SN-request" message will consequentially prevent ONU from initiating its equalization training and all other workflows.

Furthermore, even if ONU can receive an "SN-request" signal and respond to OLT, OLT will face the same problem. That is, OLT might fail in recognizing ONU's response, so OLT cannot decide whether this ONU can or when to start its uplink/downlink channel training.

In short, a problem is before formal equalization training, how ONU can correctly receive messages to start registration and training. In current PONs, the action taken in practice is to select one out of a bunch of default booster setup options with different degrees of high-frequency emphasis/boost in SERDES. Such a high-frequency emphasis/boost equalizer can be termed as "general-purpose equalizer." Why it is called general-purpose equalizer is that no adaptive or specific training is performed, but only very coarse treatment is performed. Because of redundancy in the margins of BER and power budget, such a general-purpose equalizer achieves low complexity and already good-enough performance for legacy PONs within a 20km range and below 10Gb/s speed. However, once PON comes to 50Gb/s, such a general-purpose equalizer is no longer applicable.

As shown in Table 1, in a situation where a baud rate is 50 Gb/s and a general-purpose equalizer is used, when the fiber length between ONU and OLT is 3km, BER is 14%; when the fiber length between ONU and OLT is 20km, BER is 19%, which falls under 1%. In a situation where a baud rate is 50 Gb/s and a private equalizer is used, when the fiber length between ONU and OLT is 3km, BER is 0.5%, which is up to the requirement; however, when the fiber length between ONU and OLT is 20km, BER soars to 6%. Therefore, neither traditional general-purpose equalizers nor private equalizers are applicable to current high-speed optical communication networks.

**Table 1**

| Baud rate | Fiber length (km) | Equalizer type | Bit error rate (BER) | Required BER |
|---|---|---|---|---|
| 50 Gb/s | 3 | Common | 14% | 1% |
| | 20 | | 19% | |
| | 3 | Customized | 0.5% | |
| | 20 | | 6% | |

Therefore, there is a need for a new equalization method and device so as to achieve better equalization effectiveness. According to embodiments of the present disclosure, an unregistered optical network unit determines an equalization parameter by using an optical signal which is used for other optical network unit, and equalizes a signal from an optical liner terminal by using the determined equalization parameter. In this way, the unregistered optical network unit can recognize an identification request from the optical line terminal and registers to the optical line terminal, thereby smoothly accomplishing subsequent transmission.

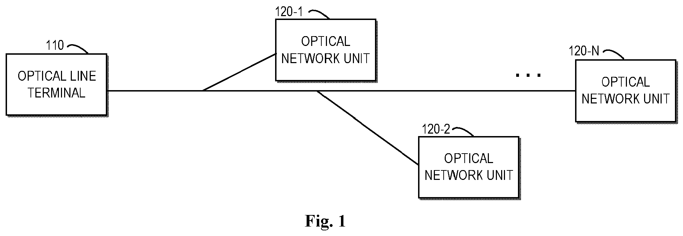

Fig. 1 shows a block diagram of an example optical communication system 100 according to embodiments of the present disclosure. As depicted in Fig. 1, the optical communication system 100 comprises an optical line terminal (OLT) 110. The optical communication system 100 further comprises an optical network unit 120-1, an optical network unit 120-2, ..., and an optical network unit 120-N, wherein N is a random appropriate positive integer.

Communication in the system 100 may follow any appropriate wireless communication technology and corresponding communication standard. Examples of communication technology include, but are not limited to, Long-Term Evolution (LTE), LTE-Advanced (LTE-A), Wideband Code Division Multiple Access (WCDMA), Code Division Multiple Access (CDMA), Global System for Mobile Communications (GSM), Orthogonal Frequency Division Multiplexing (OFDM), Wireless Local Area Network (WLAN), World Interoperability for Microwave Access (WiMAX), Bluetooth, Zigbee technology, Machine Type Communication (MTC), D2D, or M2M, etc. Moreover, communication may be performed according to any appropriate communication protocols, which include, but are not limited to, Transmission Control Protocol (TCP)/Internet Protocol (IP), Hypertext Transfer Protocol (HTTP), User Datagram Protocol (UDP), Session Description Protocol (SDP) and other protocols.

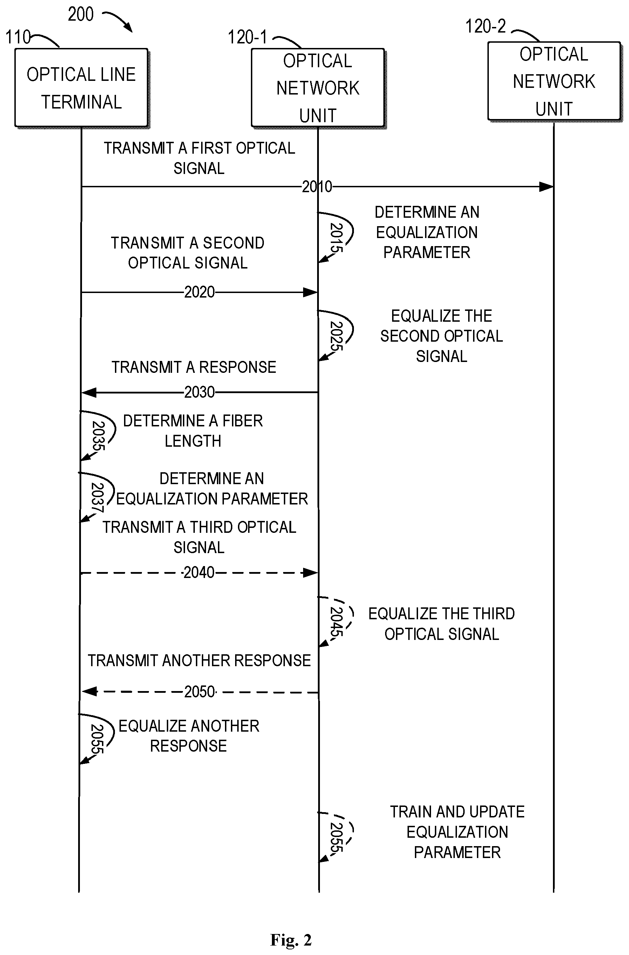

Fig. 2 shows a signaling diagram of an interaction process 200 between various entities according to embodiments of the present disclosure. For purpose of illustrations, Fig. 2 shows signaling interactions among the optical line terminal 110, the optical network unit 120-1 and the optical network unit 120-2. For the purpose of illustration only, the optical network unit 120-2 has already registered to the optical network system 110. It may be understood that the optical line terminal 110 may perform signaling interaction as shown in Fig. 2 with any appropriate optical network unit.

The optical line terminal 110 transmits 2010 an optical signal (referred to as a "first optical signal" hereinafter) to the optical network unit 120-2. The optical network unit 120-2 has already registered to the optical network 100. The optical network unit 120-1 also receives the first optical signal.

The optical network unit 120-1 determines 2015 an equalization parameter based on the first optical signal. The equalization parameter is used to equalize an optical signal from the optical line terminal 110. The optical network unit 120-1 may obtain a channel characteristics between the optical network unit 120-1 and the optical line terminal 110 based on the first optical signal. In this way, the optical network unit 120-1 may determine the equalization parameter before registering to the optical network 100. In some embodiments, the optical network unit 120-1 may determine the equalization parameter by using a neural network.

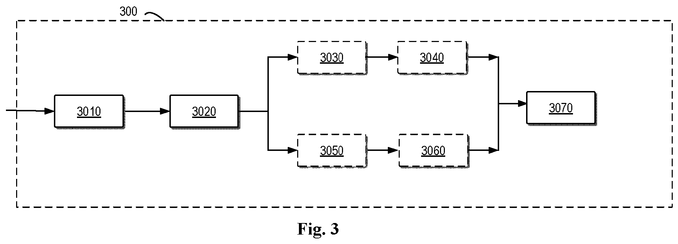

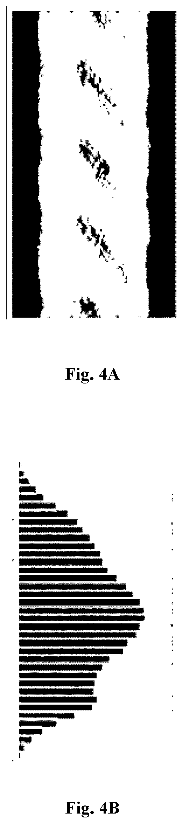

With reference to Fig. 3, Fig. 3 shows an example apparatus 300 for determining an equalization parameter. The apparatus 300 can be implemented at the optical network unit 120-1. The apparatus 300 may further comprise other modules which are not shown, for example, an avalanche photodiode (APD) and/or a PIN diode. The apparatus 300 may comprise an analogue-to-digital converter (ADC) 3010 for converting the received first optical signal to a digital signal. The apparatus 300 may further comprise a waveform statistical module 3020 for receiving statistical waveform features. In some embodiments, the waveform statistical module 3020 may receive an input of an eye diagram (as shown in Fig. 4A). In other embodiments, the waveform statistical module 3020 may further comprise an input of a histogram.

In some embodiments, the apparatus 300 comprises a first neural network module 3030. The first neural network module 3030 determines an equalizer tap based on a waveform feature output by the waveform statistical module 3020. In some embodiments, the first neural network module 3030 may be a convolutional neural network (CNN). In other embodiments, the first neural network module 3030 may be a Fourier convolutional neural network (FCNN). It may be understood that the first neural network module 3030 may have any appropriate internal structure and depth so as to guarantee learning ability. A tap generating module 3040 may generate an equalizer tap. It may be understood that the equalizer tap is generated instantly with the waveform input, on the contrary to adaptive learning like gradient descent algorithms that need tens of thousands of times for learning with small steps.

Alternatively or in addition, the optical network unit 120-1 may determine the equalization parameter by using a lookup table (LUT). For example, in other embodiments, a length determination module 3050 may determine the fiber length between the optical line terminal 110 and the optical network unit 120-1. A lookup module 3060 may use the lookup table to determine the equalizer tap based on the fiber length. The apparatus 300 may extract a channel characteristics by using a signal sent to other optical network unit and generate an appropriate equalization parameter for signal compensation without training. That is, the apparatus 300 may determine an appropriate equalization parameter with a mapping functionality from signal waveforms to equalizer taps.

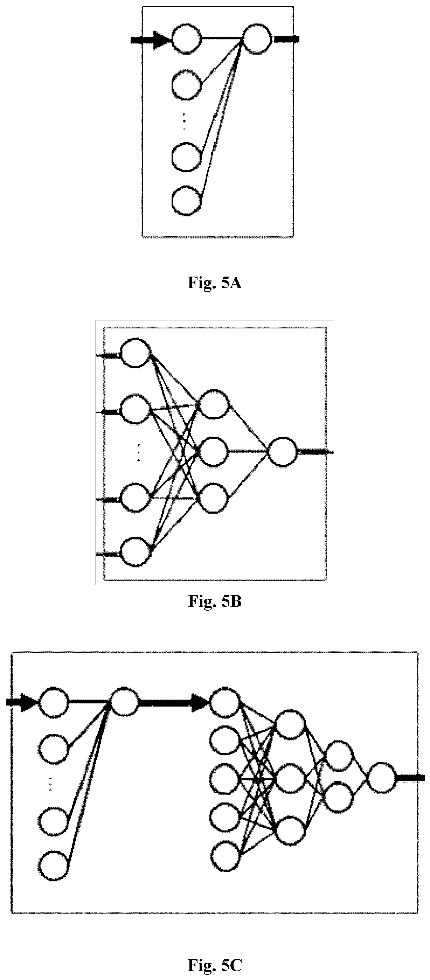

The apparatus 300 may further comprise a second neural network module 3070. The second neural network module 3070 may be configured by using the equalizer tap determined by the lookup module 3060 or the tap generating module 3040. The second neural network module 3070 may equalize a subsequent optical signal, of which process will be introduced later. The second neural network module 3070 may have any appropriate structure. For example, the second neural network module 3070 may be a linear feedforward (FFE) structure as shown in Fig. 5A. The structure may be J*1, wherein J may be any appropriate number, for example, 20. In some embodiments, the second neural network module 3070 may be a nonlinear fully-connected neural network (NN) as shown in Fig. 5B, with a structure of J*L*M, wherein values of J, L and M may also be any appropriate numbers, for example, J equals to 20, L equals to 3 and M equals to 1. In other embodiments, the second neural network module 3070 may be a hybrid linear FFE and nonlinear NN as shown in Fig. 5C, of which structure may be that J=20, L=5, M=3, N=2 and O=1.

Now referring back to Fig. 2, the optical line terminal 110 transmits 2020 an optical signal (referred to as a "second optical signal" hereinafter) to the optical network unit 120-1. For example, the second optical signal may be a synchronization signal. In other embodiments, the second optical signal may also be an SN request signal. It may be understood that the second optical signal may be any appropriate optical signal.

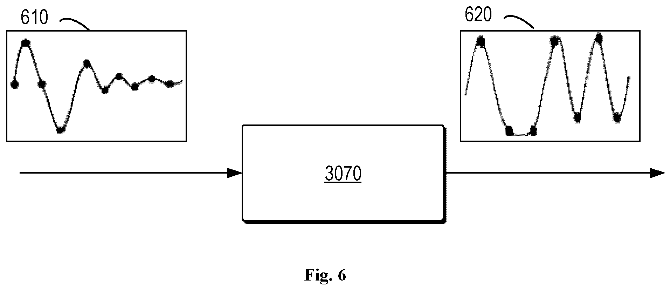

The optical network unit 120-1 equalizes 2025 the second optical signal based on the determined equalization parameter. For example, as shown in Fig. 6, the second optical signal 610 may be equalized by the second neural network module 3070, so that the received signal may be recovered as a signal 620. In this way, before the optical network unit 120-1 registers to the optical network 100, it may perform equalization to recover a signal in response.

The optical network unit 120-1 may generate a response to the second optical signal. In some embodiments, if the second optical signal is a synchronization signal, the response may be any response generated by the optical network unit 120-1. In other embodiments, if the second optical signal is a request for an identifier of the optical network unit 120-1, then the response may comprise the identifier of the optical network unit 120-1.

The optical network unit 120-1 transmits 2030 the response to the optical line terminal 110. As described above, in some embodiments, the optical network unit 120-1 may determine its fiber distance to the optical line terminal 110. The optical network unit 120-1 may add the fiber distance to the response. Therefore, the fiber distance may be included in the response so as to be sent to the optical line terminal 110.

The optical line terminal 110 determines 2035 a fiber length between the optical line terminal 110 and the optical network unit 120-1 based on a reception time of the response and a transmissition time of the second optical signal. The optical line terminal 110 determines 2037 an equalization parameter for equalizing the optical signal from the optical network unit based on the fiber length. For example, in some embodiments, the optical line terminal 110 may determine the equalization parameter by using the neural network based on the response.

In some embodiments, based on the fiber length, the optical line terminal 110 may find an appropriate equalizer tap set in the lookup table and reconfigure the equalizer during the burst of the optical network unit 120-1 or can use a universal NN to automatically adjust its equalization degree to a specific value.

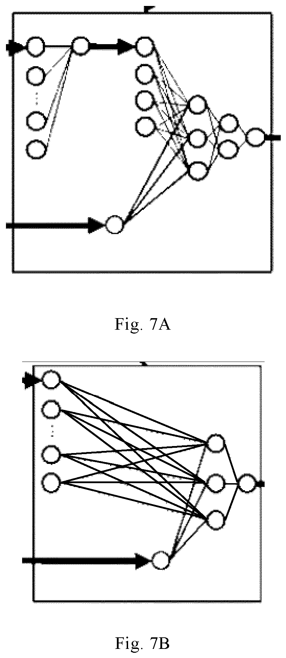

In some embodiments, the optical line terminal 110 may have a fully-connected neural network structure as shown in Fig. 7A or a cascaded neural network structure as shown in Fig. 7B. The optical line terminal 110 may have a feature of two parallel inputs, one for quantized symbols and the other for fiber length.

Referring back to Fig. 2, as depicted in Fig. 2, the optical line terminal 110 may transmit 2040 a third optical signal to the optical network unit 120-1. The third optical signal may be a request for an identifier of the optical network unit 120-1, for example, a serial number request (SN-request) message. The optical network unit 120-1 may equalize 2045 the third optical signal based on the determined equalization parameter so as to obtain the request for the identifier. The optical network unit 120-1 transmits 2050, to the optical line terminal 110, a response to the third optical signal. The response comprises the identifier of the optical network unit 120-1 so as to register to the optical line terminal 110. For example, the identifier of the optical network unit 120-1 may be a serial number of the optical network unit 120-1. It may be understood that the response may comprise any appropriate type of identification.

The optical line terminal 110 equalizes 2053 the received response based on the determined equalization parameter so as to obtain the identifier of the optical network unit 120-1. The optical line terminal 110 may register the optical network unit 120-1 with the identifier. After completion of the registration, the optical line terminal 110 and the optical network unit 120-1 perform data transmissions (for example, a fourth optical signal) over the fiber. The optical network unit 120-1 may train 2055 to update the equalization parameter based on the data transmissions. For example, the second neural network module 3070 in the optical network unit 120-1 may train to update the equalization parameter based on subsequent transmission. In some embodiments, the second neural network module 3070 may use iteration to update the equalization parameter. It may be understood that the optical network unit 120-1 may train and update the equalization parameter by using any appropriate neural network training method.

According to embodiments of the present disclosure, a signal equalizer of a new optical network unit can be appropriately configured before a formal registration response, ranging and training with a sufficiently long preamble. Therefore, a successful SN-request message reception is enabled for the new optical network unit in the initiation and then normal procedures are allowed. Such adaptive equalizer taps generation functionality is realized by statistical waveform feature analyzing (SWFA) by an entity of either a neural network (NN) or a look-up table (LUT). The principle of SWFA is based on the feature extraction/recognition from the un-decoded raw signal waveform previously arriving at the ONU. In addition, according to embodiments of the present disclosure, the optical line terminal may correctly receive the SN response before normal equalizer training.

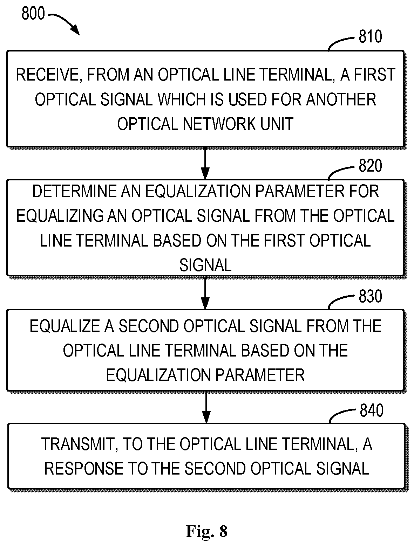

Fig. 8 shows a flowchart of a method 800 according to embodiments of the present disclosure. The method 800 may be implemented in any appropriate electronic device, for example, the optical network unit 120.

At block 810, the optical network unit 120-1 receives from the optical line terminal 110 a first optical signal for the optical network unit 120-2. The optical network unit 120-2 has registered to the optical network 100.

At block 820, the optical network unit 120-1 determines an equalization parameter based on the first optical signal. The equalization parameter is used to equalize optical signals from the optical line terminal 110. The optical network unit 120-1 may obtain a channel characteristics between the optical network unit 120-1 and the optical line terminal 110 based on the first optical signal. In this way, the optical network unit 120-1 may determine the equalization parameter before registering to the optical network 100. In some embodiments, the optical network unit 120-1 may determine the equalization parameter by using a neural network.

In some embodiments, the optical network unit 120-1 may receive a statistical waveform feature. In some embodiments, the optical network unit 120-1 may receive inputs of an eye diagram. In other embodiments, the optical network unit 120-1 may further receive inputs of a histogram.

In some embodiments, the optical network unit 120-1 may determine an equalizer tap based on the waveform feature. In some embodiments, the optical network unit 120-1 may comprise a convolutional neural network (CNN). In other embodiments, the optical network unit 120-1 may comprise a Fourier convolutional neural network (FCNN). It may be understood that the optical network unit 120-1 may have any appropriate internal structure and depth so as to guarantee learning ability. It may be understood that the equalizer tap is generated instantly with the waveform input, on contrary to adaptive learning like gradient descent algorithms that need tens of thousands of times for learning with small steps.

Alternatively or in addition, the optical network unit 120-1 may determine the equalization parameter by using a lookup table (LUT). For example, in other embodiments, the optical network unit 120-1 may determine the fiber length between the optical line terminal 110 and the optical network unit 120-1. The optical network unit 120-1 may determine the equalizer tap based on the fiber length. The optical network unit 120-1 may extract a channel characteristics by using a signal sent to other optical network unit and generate an appropriate equalization parameter for signal compensation without training. That is, the optical network unit 120-1 may determine an appropriate equalization parameter with a mapping functionality from signal waveforms to equalizer taps.

The optical network unit 120-1 receives a second optical signal from the optical line terminal 110. For example, the second optical signal may be a synchronization signal. In other embodiments, the second optical signal may also be an SN request signal. It may be understood that the second optical signal may be any appropriate optical signal.

At block 830, the optical network unit 120-1 equalizes 2025 the second optical signal based on the determined equalization parameter.

The optical network unit 120-1 may generate a response to the second optical signal. In some embodiments, if the second optical signal is a synchronization signal, the response may be any response generated by the optical network unit 120-1. In other embodiments, if the second optical signal is a request for an identifier of the optical network unit 120-1, then the response may comprise the identifier of the optical network unit 120-1.

At block 840, the optical network unit 120-1 transmits the response to the optical line terminal 110. As described above, in some embodiments, the optical network unit 120-1 may determine the fiber distance from itself to the optical line terminal 110. The optical network unit 120-1 may add the fiber distance to the response. Therefore, the optical fiber may be included in the response so as to be sent to the optical line terminal 110.

In some embodiments, the optical network unit 120-1 may receive a third optical signal from the optical line terminal 110. The third optical signal may be a request for the identifier of the optical network unit 120-1, for example, a serial number request message. The optical network unit 120-1 may equalize the third optical signal based on the determined equalization parameter so as to obtain the request for the identifier. The optical network unit 120-1 transmits the identifier to the optical line terminal 110 so as to register to the optical line terminal 110. The optical line terminal 110 may register the optical network unit 120-1 by using the identifier. After completion of the registration, the optical line terminal 110 and the optical network unit 120-1 perform data transmissions (for example, a fourth optical signal) over the fiber. The optical network unit 120-1 may train to update the equalization parameter based on the data transmission. It may be understood that the optical network unit 120-1 may train and update the equalization parameter by using any appropriate neural network training method.

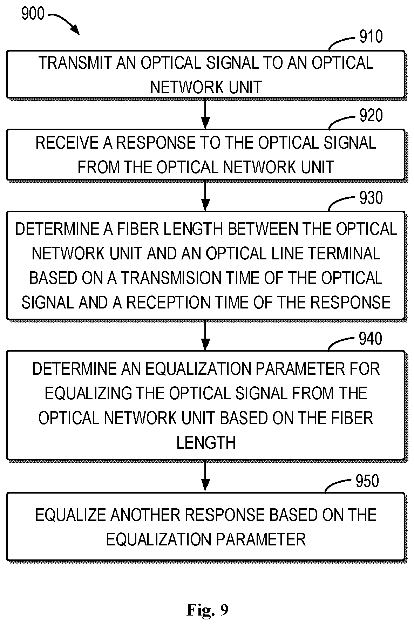

Fig. 9 shows a flowchart of a method 900 according to embodiments of the present disclosure. The method 900 may be implemented in any appropriate electronic device, for example, the optical line terminal 110.

In some embodiments, the optical line terminal 110 transmits an optical signal (referred to as a "first optical signal" hereinafter) to the optical network unit 120-2. The optical network unit 120-2 has registered to the optical network 100. The optical network unit 120-1 also receives the first optical signal.

At block 910, the optical line terminal 110 transmits an optical signal (referred to as a "second optical signal" hereinafter) to the optical network unit 120-1. For example, the second optical signal may be a synchronization signal. In other embodiments, the second optical signal may also be an SN request signal. It may be understood that the second optical signal may be any appropriate optical signal.

At block 920, the optical line terminal 110 receives a response from the optical network unit 120-1. For example, if the second optical signal is a synchronization signal, then the response may be any response generated by the optical network unit 120-1.

At block 930, the optical network unit 120-1 determines a fiber length between the optical line terminal 110 and the optical network unit 120-1 based on a reception time of the response and a transmission time of the optical signal. In some embodiments, the optical network unit 120-1 may add the optical distance to the response. Therefore, the fiber distance may be included in the response.

At block 940, the optical line terminal 110 determines an equalization parameter for equalizing the optical signal from the optical network unit 120-1 based on the fiber length. For example, in some embodiments, the optical line terminal 110 may determine the equalization parameter by using a neural network based on the response.

In some embodiments, the optical line terminal 110 may obtain from the response the fiber length between the optical line terminal 110 and the optical network unit 120-1. In some embodiments, based on the fiber length, the optical line terminal 110 may find an appropriate equalizer tap set in a lookup table (LUT) and reconfigure the equalizer during the burst of the optical network unit 120-1 or can use a universal NN to automatically adjust its equalization degree to a specific value.

In some embodiments, the optical line terminal 110 may have a fully-connected neural network structure or a cascaded neural network structure. The optical line terminal 110 may have a feature of two parallel inputs, one for quantized symbols and the other for fiber length.

In some embodiments, the optical line terminal 110 may transmit a third optical signal to the optical network unit 120-1. The third optical signal may be a request for identification of the optical network unit 120-1, for example, a serial number request (SN-request) message. The optical network unit 120-1 may transmit a response to the third optical signal to the optical line terminal 110. The response comprises the identifier of the optical network unit 120-1 for registering to the optical line terminal 110.

At block 950, the optical line terminal 110 equalizes the received response based on the determined equalization parameter for obtaining the identifier of the optical network unit 120-1. For example, the identifier of the optical network unit 120-1 may be the serial number of the optical network unit 120-1. It may be understood that the response may comprise any appropriate type of identifiers. The optical line terminal 110 may register the optical network unit 120-1 by using the identifier. After completion of the registration, the optical line terminal 110 and the optical network unit 120-1 can perform data transmission (e.g., a fourth optical signal) over the fiber.

According to embodiments of the present disclosure, a signal equalizer of a new optical network unit may be appropriately configured before formal registration response, ranging and training with a sufficiently long preamble. Therefore, a successful SN-request message reception is enabled for the new optical network unit in the very first place and then normal procedures are allowed. Such adaptive equalizer taps generation functionality is realized by statistical waveform feature analyzing (SWFA) by an entity of either a neural network (NN) or a look-up table (LUT). The principle of SWFA is based on the feature extraction/recognition from the un-decoded raw signal waveform previously arriving at the ONU. In addition, according to embodiments of the present disclosure, the optical line terminal may correctly receive the SN response before normal equalizer training.

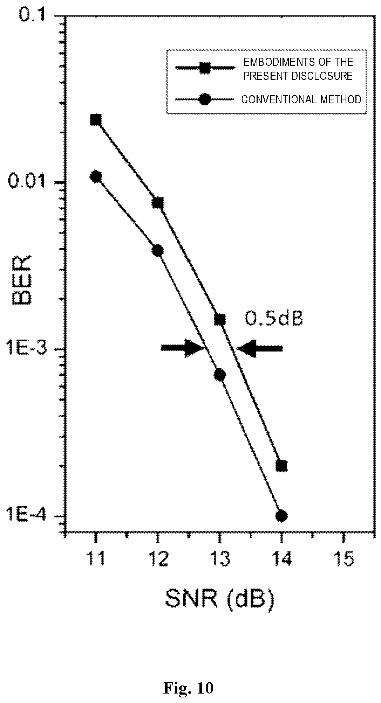

Fig. 10 shows a comparison diagram of simulation performance results of embodiments of the present disclosure and traditional technologies. It can be seen that compared with the traditional complex adaptive equalization method, the example equalization method according to the present disclosure may achieve similar SNR. The equalization method according to embodiments of the present disclosure is simpler and easier to implement.

In some embodiments, the optical network unit comprises: means for receiving from an optical line terminal a first optical signal which is used for another optical network unit; means for determining, based on the first optical signal, an equalization parameter for equalizing an optical signal from the optical line terminal; means for equalizing a second optical signal from the optical line terminal based on the equalization parameter; and means for transmitting, to the optical line terminal, a response to the second optical signal.

In some embodiments, the means for determining an equalization parameter comprises: means for determining a fiber length between the optical line terminal and the optical network unit based on the first optical signal; and means for determining the equalization parameter based on the fiber length.

In some embodiments, the means for transmitting a response comprises: means for for adding the fiber length to the response; and means for transmitting the response to the optical line terminal.

In some embodiments, the means for determining an equalization parameter comprises: means for determining, based on the first optical signal, the equalization parameter by using a neural network or a lookup table (LUT).

In some embodiments, the second optical signal is a synchronization signal.

In some embodiments, the optical network unit further comprises: means for receiving a third optical signal from the optical line terminal; means for equalizing the third optical signal based on the equalization parameter; means for obtaining a request for an identifier of the optical network unit based on the equalized third optical signal; and means for transmitting the identifier of the optical network unit to the optical line terminal, for registering the optical network unit to the optical line terminal.

In some embodiments, the optical network unit further comprises: means for receiving a fourth optical signal from the optical line terminal; and means for training and updating the equalization parameter based on the fourth optical signal.

In some embodiments, the optical line terminal comprises: means for transmitting an optical signal to an optical network unit; means for receiving, from the optical network unit, a response to the optical signal; means for determining a fiber length between the optical line terminal and the optical network unit based on a reception time of the response and a transmission time of the optical signal; means for determining an equalization parameter for equalizing an optical signal from the optical network unit based on the fiber length; and means for equalizing another response from the optical network unit based on the equalization parameter, for obtaining an identifier of the optical network unit.

In some embodiments, the apparatus further comprises: means for transmitting another optical signal to the optical network unit, the another optical signal comprising a request for the identifier of the optical network unit; and means for receiving the another response from the optical network unit, the another response comprising the identifier of the optical network unit.

In some embodiments, the means for determining an equalization parameter comprises means for determining, based on the fiber length, the equalization parameter from a lookup table, the lookup table comprising a set of multiple equalizer taps.

In some embodiments, the optical line terminal further comprises a component for determining the equalization parameter based on the fiber length.

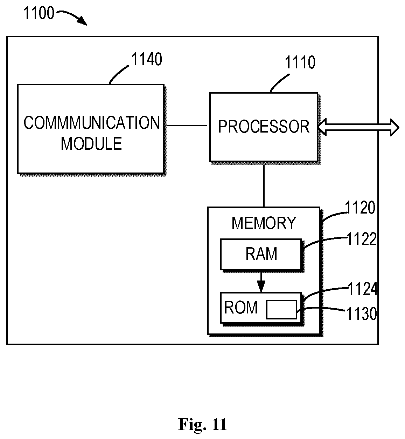

Fig. 11 is a block diagram of a device 1100 that is suitable for implementing embodiments of the present disclosure. As shown in Fig. 11, the device 1100 comprises one or more processors 1110, one or more memories 1120 coupled to the processor 1110, and one or more transmitters and/or receivers 1140 coupled to the processor 1110.

The processor 1110 may be of any type suitable to the local technical environment. As non-limiting examples, the processor 1110 may include, without limitation to, one or more general-purpose computers, special-purpose computers, microprocessors, digital signal controllers, and processors based multicore processor architecture. The device 1100 may include multiple processors, such as an application specific integrated circuit chip that synchronizes the main processor in time.

The memory 1120 may comprise one or more non-volatile memories and one or more volatile memories. Examples of non-volatile memories include, without limitation to, a read-only memory (ROM) 1124, an electrically programmable read-only memory (EPROM), a flash memory, a hard disk, a compact disk (CD), a digital video disk (DVD), an optical disk, a laser disk and other magnetic storage and/or optical storage. Examples of volatile memories include, without limitation to, a random access memory (RAM) 1122, and a volatile memory that will not last for the duration of a power failure.

A computer program 1130 comprises computer-executable instructions executed by the associated processor 1110. The program 1130 may be stored in a memory such as ROM 1124. The processor 1110 may execute any appropriate acts and treatment by loading the program 1130.

Embodiments of the present disclosure may be implemented by means of the program 1130, so as to cause the device 1100 to execute any process of the present disclosure as discussed with reference to Figs. 2 and 9. Embodiments of the present disclosure may further be implemented by hardware or combinations of software and hardware.

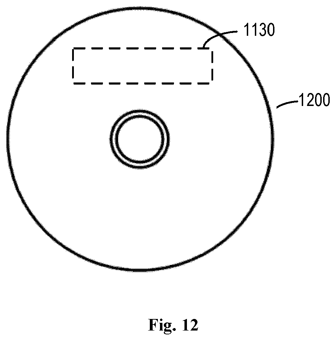

In some example embodiments, the program 1130 may be tangibly included in a computer-readable medium, which may be included in the device 1100 (such as the memory 1120) or other storage device accessible to the device 1100. The device 1100 may load the program 1130 from the computer-readable medium to RAM 1122 for execution. The computer-readable medium may comprise any type of tangible non-volatile memories, such as ROM, EPROM, a flash memory, a hard disk, CD, DVD, and other magnetic storage and/or optical storage. Fig. 12 shows an example of a computer-readable medium 1200 in the form of an optical storage disk. The computer-readable medium has the program 1130 stored thereon.

Generally, various example embodiments of the present disclosure may be implemented in hardware or special purpose circuits, software, logic, or any combination thereof. Some aspects may be implemented in hardware, while other aspects may be implemented in firmware or software that may be executed by a controller, microprocessor, or other computing device. While various aspects of embodiments of the present disclosure are illustrated and described as block diagrams, flowcharts, or using some other pictorial representations, it is to be understood that the blocks, devices, systems, techniques, or methods described herein may be implemented in, as non-limiting examples, hardware, software, firmware, special-purpose circuits or logic, general purpose hardware or a controller or other computing devices, or some combination thereof.

As one example, embodiments of the present disclosure may be described in the context of machine-executable instructions, such as those included in program modules, which are executed in a device on a target real or virtual processor. Generally speaking, the program modules include a routine, a program, a library, an object, a class, a component, a data structure, etc., which perform a particular task or implement a particular abstract data structure. In various exemplary embodiments, functions of the program modules may be merged or divided between the described program modules. Machine-executable instructions for program modules can be executed locally or in distributed devices. In distributed devices, the program modules may be located in both a local storage medium and a remote storage medium.

Computer program codes for implementing the method of the present disclosure may be written in one or more programming languages. These computer program codes may be provided to a processor of a general-purpose computer, a special-purpose computer, or other programmable data processing apparatus, so that the program codes, when executed by the computer or other programmable data processing apparatus, cause the functions/operations specified in the flowchart and/or block diagram to be implemented. The program codes may execute entirely on a computer, partly on a computer, as an independent software package, partly on a computer and partly on a remote computer, or entirely on a remote computer or server.

In the context of the present disclosure, the machine-readable medium may be any tangible medium containing or storing a program used for or related to an instruction executing system, an apparatus or a device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination thereof. More detailed examples of the machine-readable storage medium include an electrical connection with one or multiple wires, a portable computer magnetic disk, a hard disk, a random access memory (RAM), a read-only memory (ROM), an erasable programmable ROM (EPROM or flash memory), an optical storage device, a magnetic storage device, or any suitable combination thereof.

In addition, although the operations are depicted in a particular order, this should not be construed as requiring or suggesting that such operations are required to be performed in the particular order or that all illustrated operations are required to be performed to achieve desirable results. On the contrary, the steps depicted in the flowchart may be performed in a different order. Additionally or alternatively, some steps may be omitted, a plurality of steps may be combined into one step, and/or one step may be decomposed into a plurality of steps. Further, it should be noted that features and functions of two or more apparatuses of the present disclosure may be embodied in one apparatus, and vice versa, features and functions of one apparatus may further be embodied in a plurality of apparatuses.

Although the present disclosure has been described with reference to several embodiments, it should be understood that the present disclosure is not limited to the specific embodiments disclosed herein. The present disclosure is intended to cover various modifications and equivalent arrangements included within the scope of the claims as appended.

## Claims

1. A communication method (800) for an optical network (100), comprising:
at an optical network unit (120-1) that is not registered to the optical network (100), receiving (810) from an optical line terminal (110) a first optical signal which is intended for another optical network unit (120-2) registered to the optical network (100);
determining (820), based on the first optical signal, an equalization parameter for equalizing an optical signal from the optical line terminal;
equalizing (830) a second optical signal from the optical line terminal based on the equalization parameter; and
transmitting (840), to the optical line terminal, a response to the second optical signal.

2. The method (800) of claim 1, wherein determining (820) the equalization parameter comprises:
determining a fiber length between the optical line terminal and the optical network unit based on the first optical signal; and
determining the equalization parameter based on the fiber length.

3. The method (800) of claim 2, wherein transmitting (840) the response comprises:
adding the fiber length to the response; and
transmitting the response to the optical line terminal.

4. The method (800) of claim 1, wherein determining (820) the equalization parameter comprises:
determining, based on the first optical signal, the equalization parameter by using a neural network or a lookup table, LUT.

5. The method (800) of claim 1, wherein the second optical signal is a synchronization signal.

6. The method (800) of claim 1, further comprising:
receiving a third optical signal from the optical line terminal;
equalizing the third optical signal based on the equalization parameter;
obtaining a request for an identifier of the optical network unit based on the equalized third optical signal; and
transmitting the identifier of the optical network unit to the optical line terminal, for registering the optical network unit to the optical line terminal.

7. The method (800) of claim 1, further comprising:
receiving a fourth optical signal from the optical line terminal; and
training and updating the equalization parameter based on the fourth optical signal.

8. A communication method (900) for an optical network (100), comprising:
at an optical line terminal (110), transmitting (910) an optical signal to an optical network unit (120-2) that is registered to the optical network (100) and to an optical network unit (120-1) that is not registered to the optical network (100);
receiving (920), from the optical network unit (120-1) that is not registered to the optical network (100), a response to the optical signal;
determining (930) a fiber length between the optical line terminal (110) and the optical network unit (120-1) that is not registered to the optical network (100) based on a reception time of the response and a transmission time of the optical signal;
determining (940) an equalization parameter for equalizing an optical signal from the optical network unit (120-1) that is not registered to the optical network (100) based on the determined fiber length; and
equalizing (950) another response from the optical network unit (120-1) that is not registered to the optical network (100) based on the equalization parameter and obtaining an identifier of the optical network unit (120-1) that is not registered to the optical network (100) based on the another response from the optical network unit (120-1) that is not registered to the optical network (100).

9. The method (900) of claim 8, further comprising:
transmitting another optical signal to the optical network unit, the another optical signal comprising a request for the identifier of the optical network unit; and
receiving the another response from the optical network unit, the another response comprising the identifier of the optical network unit.

10. The method (900) of claim 8, wherein determining the equalization parameter comprises:
determining, based on the fiber length, the equalization parameter from a lookup table, the lookup table comprising a set of multiple equalizer taps.

11. The method (900) of claim 8, wherein determining the equalization parameter comprises:
determining the equalization parameter based on the fiber length.

12. An optical network unit (120-1) for an optical network (100), wherein the optical network unit (120-1) is not registered to the optical network (100), comprising:
means for receiving from an optical line terminal (110) a first optical signal which is intended for another optical network unit (120-2) registered to the network (100);
means for determining, based on the first optical signal, an equalization parameter for equalizing an optical signal from the optical line terminal (110);
means for equalizing a second optical signal from the optical line terminal (110) based on the equalization parameter; and
means for transmitting, to the optical line terminal (110), a response to the second optical signal.

13. The optical network unit (120-1) of claim 12, comprising:
at least one processor; and
a memory coupled to the at least one processor, the memory storing instructions which, when executed by the at least one processor, cause the optical network unit to perform acts, the acts comprising:
receiving from the optical line terminal (110) a first optical signal which is intended for another optical network unit (120-2) registered to the network (100);
determining, based on the first optical signal, an equalization parameter for equalizing an optical signal from the optical line terminal;
equalizing a second optical signal from the optical line terminal based on the equalization parameter; and
transmitting, to the optical line terminal, a response to the second optical signal.

14. The optical network unit (120-1) of claim 12 or 13, wherein the optical network unit (120-1) is configured to perform the method according to at least one of the claims 2 to 7.

15. An optical line terminal (110) for an optical network (100), comprising:
means for transmitting an optical signal to an optical network unit (120-2) that is registered to the optical network (100) and to an optical network unit (120-1) that is not registered to the optical network (100);
means for receiving, from the optical network unit (120-1) that is not registered to the optical network (100), a response to the optical signal;
means for determining a fiber length between the optical line terminal (110) and the optical network unit (120-1) that is not registered to the optical network (100) based on a reception time of the response and a transmission time of the optical signal;
means for determining an equalization parameter for equalizing an optical signal from the optical network unit (120-1) that is not registered to the optical network (100) based on the determined fiber length; and
means for equalizing another response from the optical network unit (120-1) that is not registered to the optical network (100) based on the equalization parameter and obtaining an identifier of the optical network unit (120-1) that is not registered to the optical network (100) based on the another response from the optical network unit (120-1) that is not registered to the optical network (100).

16. The optical line terminal (110) of claim 15, comprising:
at least one processor; and a memory coupled to the at least one processor, the memory storing instructions which, when executed by the at least one processor, cause the optical line terminal to perform acts, the acts comprising:
transmitting an optical signal to an optical network unit (120-2) that is registered to the optical network (100) and to an optical network unit (120-1) that is not registered to the optical network (100);
receiving, from the optical network unit (120-1) that is not registered to the optical network (100), a response to the optical signal;
determining a fiber length between the optical line terminal (110) and the optical network unit (120-1) that is not registered to the optical network (100) based on a reception time of the response and a transmission time of the optical signal;
determining an equalization parameter for equalizing an optical signal from the optical network unit (120-1) that is not registered to the optical network (100) based on the fiber length; and
equalizing another response from the optical network unit (120-1) that is not registered to the optical network (100) based on the equalization parameter and obtaining an identifier of the optical network unit (120-1) that is not registered to the optical network (100) based on the another response from the optical network unit (120-1) that is not registered to the optical network (100).

17. The optical line terminal (110) of claim 15 or 16, wherein the optical line terminal (110) is configured to perform the method according to at least one of the claims 9 to 11.

18. A computer-readable medium (1200), storing instructions (1130) thereon which, when executed by at least one processing unit of a machine, cause the machine to perform a method according to any of claims 1 to 7 and/or any of claims 8 to 11.

## Patentansprüche

1. Kommunikationsverfahren (800) für ein optisches Netzwerk (100), umfassend:
an einer optischen Netzwerkeinheit (120-1), die nicht bei dem optischen Netzwerk (100) registriert ist, Empfangen (810), von einem optischen Leitungsabschluss (110), eines ersten optischen Signals, das für eine andere optische Netzwerkeinheit (120-2) bestimmt ist, die bei dem optischen Netzwerk (100) registriert ist;
Bestimmen (820), auf der Grundlage des ersten optischen Signals, eines Entzerrungsparameters zum Entzerren eines optischen Signals von dem optischen Leitungsabschluss;
Entzerren (830) eines zweiten optischen Signals von dem optischen Leitungsabschluss auf der Grundlage des Entzerrungsparameters; und
Übertragen (840), an den optischen Leitungsabschluss, einer Antwort auf das zweite optische Signal.

2. Verfahren (800) nach Anspruch 1, wobei das Bestimmen (820) des Entzerrungsparameters umfasst:
Bestimmen einer Faserlänge zwischen dem optischen Leitungsabschluss und der optischen Netzwerkeinheit auf der Grundlage des ersten optischen Signals; und
Bestimmen des Entzerrungsparameters auf der Grundlage der Faserlänge.

3. Verfahren (800) nach Anspruch 2, wobei das Übertragen (840) der Antwort umfasst:
Hinzufügen der Faserlänge zu der Antwort; und
Übertragen der Antwort an den optischen Leitungsabschluss.

4. Verfahren (800) nach Anspruch 1, wobei das Bestimmen (820) des Entzerrungsparameters umfasst:
Bestimmen, auf der Grundlage des ersten optischen Signals, des Entzerrungsparameters unter Verwendung eines neuronalen Netzes oder einer Nachschlagetabelle, LUT.

5. Verfahren (800) nach Anspruch 1, wobei das zweite optische Signal ein Synchronisationssignal ist.

6. Verfahren (800) nach Anspruch 1, ferner umfassend:
Empfangen eines dritten optischen Signals von dem optischen Leitungsabschluss;
Entzerren des dritten optischen Signals auf der Grundlage des Entzerrungsparameters;
Erhalten einer Anforderung einer Kennung der optischen Netzwerkeinheit auf der Grundlage des entzerrten dritten optischen Signals; und
Übertragen der Kennung der optischen Netzwerkeinheit an den optischen Leitungsabschluss, um die optische Netzwerkeinheit bei dem optischen Leitungsabschluss zu registrieren.

7. Verfahren (800) nach Anspruch 1, ferner umfassend:
Empfangen eines vierten optischen Signals von dem optischen Leitungsabschluss; und
Trainieren und Aktualisieren des Entzerrungsparameters auf der Grundlage des vierten optischen Signals.

8. Kommunikationsverfahren (900) für ein optisches Netzwerk (100), umfassend:
an einem optischen Leitungsabschluss (110), Übertragen (910) eines optischen Signals an eine optische Netzwerkeinheit (120-2), die bei dem optischen Netzwerk (100) registriert ist, und an eine optische Netzwerkeinheit (120-1), die nicht bei dem optischen Netzwerk (100) registriert ist;
Empfangen (920), von der optischen Netzwerkeinheit (120-1), die nicht bei dem optischen Netzwerk (100) registriert ist, einer Antwort auf das optische Signal;
Bestimmen (930) einer Faserlänge zwischen dem optischen Leitungsabschluss (110) und der optischen Netzwerkeinheit (120-1), die nicht bei dem optischen Netzwerk (100) registriert ist, auf der Grundlage einer Empfangszeit der Antwort und einer Übertragungszeit des optischen Signals;
Bestimmen (940) eines Entzerrungsparameters zum Entzerren eines optischen Signals von der optischen Netzwerkeinheit (120-1), die nicht bei dem optischen Netzwerk (100) registriert ist, auf der Grundlage der bestimmten Faserlänge; und
Entzerren (950) einer weiteren Antwort von der optischen Netzwerkeinheit (120-1), die nicht bei dem optischen Netzwerk (100) registriert ist, auf der Grundlage des Entzerrungsparameters und Erhalten einer Kennung der optischen Netzwerkeinheit (120-1), die nicht bei dem optischen Netzwerk (100) registriert ist, auf der Grundlage der weiteren Antwort von der optischen Netzwerkeinheit (120-1), die nicht bei dem optischen Netzwerk (100) registriert ist.

9. Verfahren (900) nach Anspruch 8, ferner umfassend:
Übertragen eines weiteren optischen Signals an die optische Netzwerkeinheit, wobei das weitere optische Signal eine Anforderung der Kennung der optischen Netzwerkeinheit umfasst; und
Empfangen der weiteren Antwort von der optischen Netzwerkeinheit, wobei die weitere Antwort die Kennung der optischen Netzwerkeinheit umfasst.

10. Verfahren (900) nach Anspruch 8, wobei das Bestimmen des Entzerrungsparameters umfasst:
Bestimmen, auf der Grundlage der Faserlänge, des Entzerrungsparameters aus einer Nachschlagetabelle, wobei die Nachschlagetabelle einen Satz von mehreren Entzerrerkoeffizienten umfasst.

11. Verfahren (900) nach Anspruch 8, wobei das Bestimmen des Entzerrungsparameters umfasst:
Bestimmen des Entzerrungsparameters auf der Grundlage der Faserlänge.

12. Optische Netzwerkeinheit (120-1) für ein optisches Netzwerk (100), wobei die optische Netzwerkeinheit (120-1) nicht bei dem optischen Netzwerk (100) registriert ist, umfassend:
ein Mittel zum Empfangen, von einem optischen Leitungsabschluss (110), eines ersten optischen Signals, das für eine andere optische Netzwerkeinheit (120-2) bestimmt ist, die bei dem Netzwerk (100) registriert ist;
ein Mittel zum Bestimmen, auf der Grundlage des ersten optischen Signals, eines Entzerrungsparameters zum Entzerren eines optischen Signals von dem optischen Leitungsabschluss (110);
ein Mittel zum Entzerren eines zweiten optischen Signals von dem optischen Leitungsabschluss (110) auf der Grundlage des Entzerrungsparameters; und
ein Mittel zum Übertragen, an den optischen Leitungsabschluss (110), einer Antwort auf das zweite optische Signal.

13. Optische Netzwerkeinheit (120-1) nach Anspruch 12, umfassend:
mindestens einen Prozessor; und
einen Speicher, der mit dem mindestens einen Prozessor gekoppelt ist, wobei der Speicher Anweisungen speichert, die, wenn sie von dem mindestens einen Prozessor ausgeführt werden, die optische Netzwerkeinheit veranlassen, Handlungen durchzuführen, wobei die Handlungen umfassen:
Empfangen, von dem optischen Leitungsabschluss (110), eines ersten optischen Signals, das für eine andere optische Netzwerkeinheit (120-2) bestimmt ist, die bei dem Netzwerk (100) registriert ist;
Bestimmen, auf der Grundlage des ersten optischen Signals, eines Entzerrungsparameters zum Entzerren eines optischen Signals von dem optischen Leitungsabschluss;
Entzerren eines zweiten optischen Signals von dem optischen Leitungsabschluss auf der Grundlage des Entzerrungsparameters; und
Übertragen, an den optischen Leitungsabschluss, einer Antwort auf das zweite optische Signal.

14. Optische Netzwerkeinheit (120-1) nach Anspruch 12 oder 13, wobei die optische Netzwerkeinheit (120-1) dazu konfiguriert ist, das Verfahren nach mindestens einem der Ansprüche 2 bis 7 durchzuführen.

15. Optischer Leitungsabschluss (110) für ein optisches Netzwerk (100), umfassend:
ein Mittel zum Übertragen eines optischen Signals an eine optische Netzwerkeinheit (120-2), die bei dem optischen Netzwerk (100) registriert ist, und an eine optische Netzwerkeinheit (120-1), die nicht bei dem optischen Netzwerk (100) registriert ist;
ein Mittel zum Empfangen, von der optischen Netzwerkeinheit (120-1), die nicht bei dem optischen Netzwerk (100) registriert ist, einer Antwort auf das optische Signal;
ein Mittel zum Bestimmen einer Faserlänge zwischen dem optischen Leitungsabschluss (110) und der optischen Netzwerkeinheit (120-1), die nicht bei dem optischen Netzwerk (100) registriert ist, auf der Grundlage einer Empfangszeit der Antwort und einer Übertragungszeit des optischen Signals;
ein Mittel zum Bestimmen eines Entzerrungsparameters zum Entzerren eines optischen Signals von der optischen Netzwerkeinheit (120-1), die nicht bei dem optischen Netzwerk (100) registriert ist, auf der Grundlage der bestimmten Faserlänge; und
ein Mittel zum Entzerren einer weiteren Antwort von der optischen Netzwerkeinheit (120-1), die nicht bei dem optischen Netzwerk (100) registriert ist, auf der Grundlage des Entzerrungsparameters und zum Erhalten einer Kennung der optischen Netzwerkeinheit (120-1), die nicht bei dem optischen Netzwerk (100) registriert ist, auf der Grundlage der weiteren Antwort von der optischen Netzwerkeinheit (120-1), die nicht bei dem optischen Netzwerk (100) registriert ist.

16. Optischer Leitungsabschluss (110) nach Anspruch 15, umfassend:
mindestens einen Prozessor; und einen Speicher, der mit dem mindestens einen Prozessor gekoppelt ist, wobei der Speicher Anweisungen speichert, die, wenn sie von dem mindestens einen Prozessor ausgeführt werden, den optischen Leitungsabschluss veranlassen, Handlungen durchzuführen, wobei die Handlungen umfassen:
Übertragen eines optischen Signals an eine optische Netzwerkeinheit (120-2), die bei dem optischen Netzwerk (100) registriert ist, und an eine optische Netzwerkeinheit (120-1), die nicht bei dem optischen Netzwerk (100) registriert ist;
Empfangen, von der optischen Netzwerkeinheit (120-1), die nicht bei dem optischen Netzwerk (100) registriert ist, einer Antwort auf das optische Signal;
Bestimmen einer Faserlänge zwischen dem optischen Leitungsabschluss (110) und der optischen Netzwerkeinheit (120-1), die nicht bei dem optischen Netzwerk (100) registriert ist, auf der Grundlage einer Empfangszeit der Antwort und einer Übertragungszeit des optischen Signals;
Bestimmen eines Entzerrungsparameters zum Entzerren eines optischen Signals von der optischen Netzwerkeinheit (120-1), die nicht bei dem optischen Netzwerk (100) registriert ist, auf der Grundlage der Faserlänge; und
Entzerren einer weiteren Antwort von der optischen Netzwerkeinheit (120-1), die nicht bei dem optischen Netzwerk (100) registriert ist, auf der Grundlage des Entzerrungsparameters und Erhalten einer Kennung der optischen Netzwerkeinheit (120-1), die nicht bei dem optischen Netzwerk (100) registriert ist, auf der Grundlage der weiteren Antwort von der optischen Netzwerkeinheit (120-1), die nicht bei dem optischen Netzwerk (100) registriert ist.

17. Optischer Leitungsabschluss (110) nach Anspruch 15 oder 16, wobei der optische Leitungsabschluss (110) dazu konfiguriert ist, das Verfahren nach mindestens einem der Ansprüche 9 bis 11 durchzuführen.

18. Computerlesbares Medium (1200), auf dem Anweisungen (1130) gespeichert sind, die, wenn sie von mindestens einer Verarbeitungseinheit einer Maschine ausgeführt werden, die Maschine veranlassen, ein Verfahren nach einem der Ansprüche 1 bis 7 und/oder einem der Ansprüche 8 bis 11 durchzuführen.

## Revendications

1. Procédé de communication (800) pour un réseau optique (100), comprenant :
au niveau d'une unité de réseau optique (120-1) qui n'est pas enregistrée auprès du réseau optique (100), la réception (810), depuis un terminal de ligne optique (110), d'un premier signal optique qui est destiné à une autre unité de réseau optique (120-2) enregistrée auprès du réseau optique (100) ;
la détermination (820), sur la base du premier signal optique, d'un paramètre d'égalisation pour égaliser un signal optique provenant du terminal de ligne optique ;
l'égalisation (830) d'un deuxième signal optique provenant du terminal de ligne optique sur la base du paramètre d'égalisation ; et
la transmission (840), au terminal de ligne optique, d'une réponse au deuxième signal optique.

2. Procédé (800) selon la revendication 1, dans lequel la détermination (820) du paramètre d'égalisation comprend :
la détermination d'une longueur de fibre entre le terminal de ligne optique et l'unité de réseau optique sur la base du premier signal optique ; et
la détermination du paramètre d'égalisation sur la base de la longueur de fibre.

3. Procédé (800) selon la revendication 2, dans lequel la transmission (840) de la réponse comprend :
l'ajout de la longueur de fibre à la réponse ; et
la transmission de la réponse au terminal de ligne optique.

4. Procédé (800) selon la revendication 1, dans lequel la détermination (820) du paramètre d'égalisation comprend :
la détermination, sur la base du premier signal optique, du paramètre d'égalisation en utilisant un réseau de neurones ou une table de consultation, LUT.

5. Procédé (800) selon la revendication 1, dans lequel le deuxième signal optique est un signal de synchronisation.

6. Procédé (800) selon la revendication 1, comprenant en outre :
la réception d'un troisième signal optique provenant du terminal de ligne optique ;
l'égalisation du troisième signal optique sur la base du paramètre d'égalisation ;
l'obtention d'une requête d'un identifiant de l'unité de réseau optique sur la base du troisième signal optique égalisé ; et
la transmission de l'identifiant de l'unité de réseau optique au terminal de ligne optique, pour enregistrer l'unité de réseau optique auprès du terminal de ligne optique.

7. Procédé (800) selon la revendication 1, comprenant en outre :
la réception d'un quatrième signal optique provenant du terminal de ligne optique ; et
l'entraînement et la mise à jour du paramètre d'égalisation sur la base du quatrième signal optique.

8. Procédé de communication (900) pour un réseau optique (100), comprenant :
au niveau d'un terminal de ligne optique (110), la transmission (910) d'un signal optique à une unité de réseau optique (120-2) qui est enregistrée auprès du réseau optique (100) et à une unité de réseau optique (120-1) qui n'est pas enregistrée auprès du réseau optique (100) ;
la réception (920), depuis l'unité de réseau optique (120-1) qui n'est pas enregistrée auprès du réseau optique (100), d'une réponse au signal optique ;
la détermination (930) d'une longueur de fibre entre le terminal de ligne optique (110) et l'unité de réseau optique (120-1) qui n'est pas enregistrée auprès du réseau optique (100) sur la base d'un temps de réception de la réponse et d'un temps de transmission du signal optique ;
la détermination (940) d'un paramètre d'égalisation pour égaliser un signal optique provenant de l'unité de réseau optique (120-1) qui n'est pas enregistrée auprès du réseau optique (100) sur la base de la longueur de fibre déterminée ; et
l'égalisation (950) d'une autre réponse provenant de l'unité de réseau optique (120-1) qui n'est pas enregistrée auprès du réseau optique (100) sur la base du paramètre d'égalisation et l'obtention d'un identifiant de l'unité de réseau optique (120-1) qui n'est pas enregistrée auprès du réseau optique (100) sur la base de l'autre réponse provenant de l'unité de réseau optique (120-1) qui n'est pas enregistrée auprès du réseau optique (100).

9. Procédé (900) selon la revendication 8, comprenant en outre :
la transmission d'un autre signal optique à l'unité de réseau optique, l'autre signal optique comprenant une requête de l'identifiant de l'unité de réseau optique ; et
la réception de l'autre réponse provenant de l'unité de réseau optique, l'autre réponse comprenant l'identifiant de l'unité de réseau optique.

10. Procédé (900) selon la revendication 8, dans lequel la détermination du paramètre d'égalisation comprend :
la détermination, sur la base de la longueur de fibre, du paramètre d'égalisation à partir d'une table de consultation, la table de consultation comprenant un ensemble de multiples coefficients d'égaliseur.

11. Procédé (900) selon la revendication 8, dans lequel la détermination du paramètre d'égalisation comprend :
la détermination du paramètre d'égalisation sur la base de la longueur de fibre.

12. Unité de réseau optique (120-1) pour un réseau optique (100), dans laquelle l'unité de réseau optique (120-1) n'est pas enregistrée auprès du réseau optique (100), comprenant :
un moyen pour recevoir, depuis un terminal de ligne optique (110), un premier signal optique qui est destiné à une autre unité de réseau optique (120-2) enregistrée auprès du réseau (100) ;
un moyen pour déterminer, sur la base du premier signal optique, un paramètre d'égalisation pour égaliser un signal optique provenant du terminal de ligne optique (110) ;
un moyen pour égaliser un deuxième signal optique provenant du terminal de ligne optique (110) sur la base du paramètre d'égalisation ; et
un moyen pour transmettre, au terminal de ligne optique (110), une réponse au deuxième signal optique.

13. Unité de réseau optique (120-1) selon la revendication 12, comprenant :
au moins un processeur ; et
une mémoire couplée à l'au moins un processeur, la mémoire stockant des instructions qui, lorsqu'elles sont exécutées par l'au moins un processeur, amènent l'unité de réseau optique à effectuer des actes, les actes comprenant :
la réception, depuis le terminal de ligne optique (110), d'un premier signal optique qui est destiné à une autre unité de réseau optique (120-2) enregistrée auprès du réseau (100) ;
la détermination, sur la base du premier signal optique, d'un paramètre d'égalisation pour égaliser un signal optique provenant du terminal de ligne optique ;
l'égalisation d'un deuxième signal optique provenant du terminal de ligne optique sur la base du paramètre d'égalisation ; et
la transmission, au terminal de ligne optique, d'une réponse au deuxième signal optique.

14. Unité de réseau optique (120-1) selon la revendication 12 ou 13, dans laquelle l'unité de réseau optique (120-1) est configurée pour effectuer le procédé selon au moins l'une des revendications 2 à 7.

15. Terminal de ligne optique (110) pour un réseau optique (100), comprenant :
un moyen pour transmettre un signal optique à une unité de réseau optique (120-2) qui est enregistrée auprès du réseau optique (100) et à une unité de réseau optique (120-1) qui n'est pas enregistrée auprès du réseau optique (100) ;
un moyen pour recevoir, depuis l'unité de réseau optique (120-1) qui n'est pas enregistrée auprès du réseau optique (100), une réponse au signal optique ;
un moyen pour déterminer une longueur de fibre entre le terminal de ligne optique (110) et l'unité de réseau optique (120-1) qui n'est pas enregistrée auprès du réseau optique (100) sur la base d'un temps de réception de la réponse et d'un temps de transmission du signal optique ;
un moyen pour déterminer un paramètre d'égalisation pour égaliser un signal optique provenant de l'unité de réseau optique (120-1) qui n'est pas enregistrée auprès du réseau optique (100) sur la base de la longueur de fibre déterminée ; et
un moyen pour égaliser une autre réponse provenant de l'unité de réseau optique (120-1) qui n'est pas enregistrée auprès du réseau optique (100) sur la base du paramètre d'égalisation et obtenir un identifiant de l'unité de réseau optique (120-1) qui n'est pas enregistrée auprès du réseau optique (100) sur la base de l'autre réponse provenant de l'unité de réseau optique (120-1) qui n'est pas enregistrée auprès du réseau optique (100).

16. Terminal de ligne optique (110) selon la revendication 15, comprenant :
au moins un processeur ; et une mémoire couplée à l'au moins un processeur, la mémoire stockant des instructions qui, lorsqu'elles sont exécutées par l'au moins un processeur, amènent le terminal de ligne optique à effectuer des actes, les actes comprenant :
la transmission d'un signal optique à une unité de réseau optique (120-2) qui est enregistrée auprès du réseau optique (100) et à une unité de réseau optique (120-1) qui n'est pas enregistrée auprès du réseau optique (100) ;
la réception, depuis l'unité de réseau optique (120-1) qui n'est pas enregistrée auprès du réseau optique (100), d'une réponse au signal optique ;
la détermination d'une longueur de fibre entre le terminal de ligne optique (110) et l'unité de réseau optique (120-1) qui n'est pas enregistrée auprès du réseau optique (100) sur la base d'un temps de réception de la réponse et d'un temps de transmission du signal optique ;
la détermination d'un paramètre d'égalisation pour égaliser un signal optique provenant de l'unité de réseau optique (120-1) qui n'est pas enregistrée auprès du réseau optique (100) sur la base de la longueur de fibre ; et
l'égalisation d'une autre réponse provenant de l'unité de réseau optique (120-1) qui n'est pas enregistrée auprès du réseau optique (100) sur la base du paramètre d'égalisation et l'obtention d'un identifiant de l'unité de réseau optique (120-1) qui n'est pas enregistrée auprès du réseau optique (100) sur la base de l'autre réponse provenant de l'unité de réseau optique (120-1) qui n'est pas enregistrée auprès du réseau optique (100).

17. Terminal de ligne optique (110) selon la revendication 15 ou 16, dans lequel le terminal de ligne optique (110) est configuré pour effectuer le procédé selon au moins l'une des revendications 9 à 11.

18. Support lisible par ordinateur (1200), stockant des instructions (1130) sur celui-ci qui, lorsqu'elles sont exécutées par au moins une unité de traitement d'une machine, amènent la machine à effectuer un procédé selon l'une quelconque des revendications 1 à 7 et/ou l'une quelconque des revendications 8 à 11.
